# EUROPÄISCHE PATENTSCHRIFT

(11) **EP 1 975 009 B1**
(45) Veröffentlichungstag und Bekanntmachung des Hinweises auf die Patenterteilung: **23.12.2009**
(21) Anmeldenummer: 08405081.4
(22) Anmeldetag: 17.03.2008
(51) Int. Cl.: B60R 13/08, F02B 77/13

(54) **Verkleidungsschale mit einer Dämmschicht**
Cladding muffler with an insulating layer
Coque de garniture dotée d'une couche d'isolation

(30) Priorität: 30.03.2007 CH 5252007
(43) Veröffentlichungstag der Anmeldung: 01.10.2008
(73) Patentinhaber: Kunststoff Schwanden AG, CH-8762 Schwanden/GL (CH)
(72) Erfinder: Kiener, Albert, 8753 Mollis (CH); Küsperth, Josef, 8762 Schwanden (CH)
(74) Vertreter: Quehl, Horst Max

(56) Entgegenhaltungen:
- EP-A- 1 520 772
- DE-A1- 4 343 970
- DE-A1-102004 052 779

## Beschreibung

Die Erfindung betrifft eine Verkleidungsschale mit einer Bodenwand und Seitenwänden, an deren Innenseite eine Dämmschicht befestigt ist, wobei die Dämmschicht an mehreren Verbindungsstellen mit der Verkleidungsschale verklebt oder verschweisst ist.

Bei einer bekannten Verkleidungsschale dieser Art, wie sie beispielsweise zur Kapselung einer Brennkraftmaschine verwendet wird, ist die innere Dämmschicht punktweise sowohl mit der Bodenwand als auch mit den Seitenwänden verklebt oder verschweisst. Die Herstellung solcher Verbindungen zwischen der Verkleidungsschale und ihrer Dämmschicht ist verhältnismässig aufwändig, da die hierzu erforderlichen Andruckbewegungen eines Stempels in mehreren Richtungen, d.h. bei z.B. rechteckförmiger Verkleidungsschale, in fünf verschiedenen Richtungen ausgeführt werden müssen. Aus dem Dokument EP 1 520 772 A ist eine Befestigung mit einer stift förmigen Positionierung und einer Schweiß naht bekannt.

Der Erfindung liegt die Aufgabe zugrunde, den genannten Nachteil zu vermeiden und somit eine Verkleidungsschale der genannten Art zu finden, die sich einfacher und damit kostengünstiger herstellen lässt.

Die Lösung dieser Aufgabe erfolgt erfindungsgemäss dadurch, dass an der Innenseite jeder Seitenwand hakenartige, mit einem freien Ende nach aussen ragende Verankerungselemente vorgesehen sind, die sich mit der Dämmschicht in Eingriff befinden, so dass die Stellen einer Klebe- oder Schweissverbindung auf die Bodenwand beschränkt sind.

Im Folgenden wird die Erfindung anhand eines zeichnerisch dargestellten Ausführungsbeispieles näher erläutert. Es zeigt in perspektivischer Darstellung:
Fig.1 eine Ansicht der Innenseite der Verkleidungsschale vor ihrer Verbindung mit einer Dämmschicht, mit teilweise weggeschnittener Seitenwand,
Fig.2 eine Ansicht gegen die Unterseite der Dämmschicht vor ihrer Verbindung mit der Verkleidungsschale,
Fig.3 eine separate, vergrösserte Darstellung eines Verankerungselementes der Verkleidungsschale nach Fig.1 und
Fig.4 eine Teilansicht eines inneren Eckbereichs der Verkleidungsschale nach Fig.1 mit eingesetzter Dämmschicht nach Fig. 2, mit in Eingriffsposition befindlichem Schweissstempel.

Die beispielsweise rechteckförmige Verkleidungsschale 1 hat an ihrer Innenseite eine aus einer Dämmmatte gebildete Dämmschicht 2, die in Anwendung z.B. zur Einkapselung einer Verbrennungskraftmaschine, der Geräuschdämmmung dienen soll. Um den zu erwartenden mechanischen und thermischen Beanspruchungen sicher zu genügen, ist die Dämmschicht 2 an mehreren Stellen fest sowohl mit der Bodenwand 3 als auch den vier Seitenwänden 4 bis 7 verbunden.

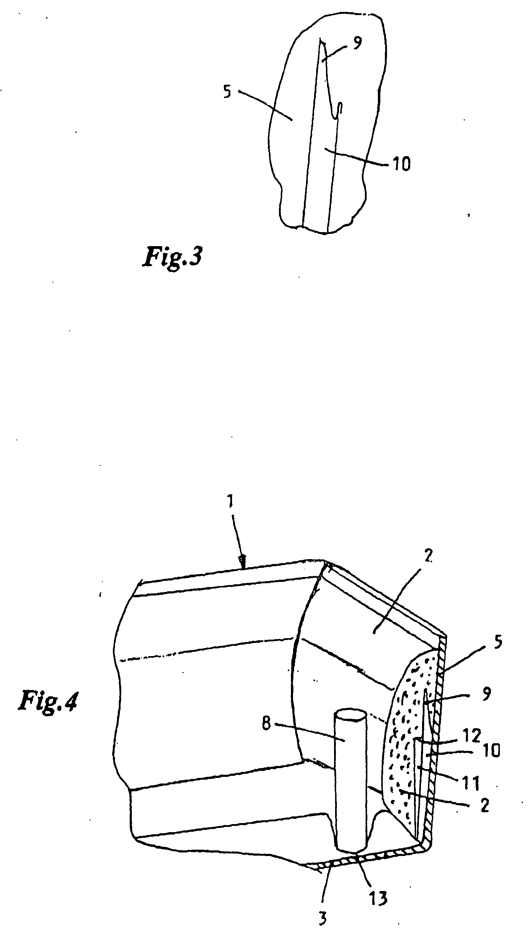

Die Verbindung der Dämmschicht 2 mit der Bodenwand 3 erfolgt auf an sich bekannte Weise durch punktweises Verkleben oder Verschweissen, wie in Fig.4 durch einen Schweissstempel 8 angedeutet ist.

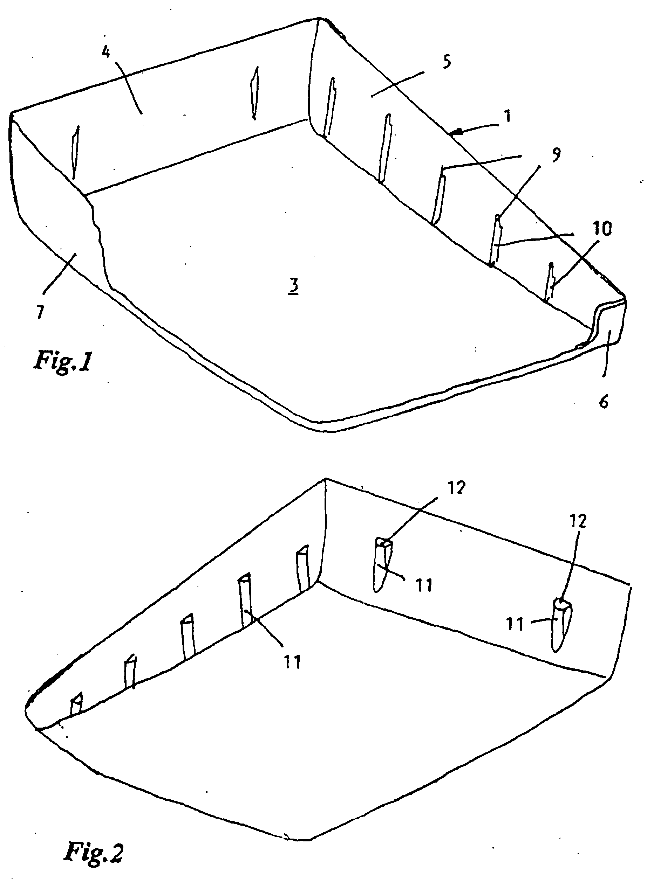

Auf erfindungsgemässe Weise wird gleichzeitig mit der für die Herstellung der Befestigung an der Bodenwand 3 erforderlichen Anpressbewegung selbststätig eine formschlüssige Verbindung mit den Seitenwänden 4 bis 7 hergestellt, indem dort mehrere, mit einem freien Ende 9 dornartig nach aussen ragende Verankerungselemente 10 vorgesehen sind, die dabei in das Material der Dämmschicht 2 eindringen. Solche Verankerungselemente 10 sind beispielsweise in gleichem Abstand parallel zueinander, rippenförmig an der Innenseite der Seitenwände (4-7) angeformt, wie die Darstellung der Fig.1 veranschaulicht.

Um die Aufnahme und das Eindringen der Verankerungselemente 10 in die Dämmschicht 2 zu erleichtern, ist in dieser im Bereich jedes Verankerungselementes (10) eine vorgeformte, für dessen Aufnahme bestimmte Ausnehmung 11 vorgesehen. Ausserdem sind die Verankerungslemente 10 an ihrem freien Ende 9 dornartig spitz auslaufend ausgebildet, so dass sie beim Eindrücken der die Dämmschicht 2 bildenden Dämmmatte in die Verkleidungsschale 1 durch eine endseitige Abschlussfläche 12 dieser Ausnehmungen 11 hindurch in die Dämmschicht 2 eindringen.

Um den für das dornartige Eindringen der Verankerungselemente 10 in die Dämmschicht 2 erforderlichen Andruck auf den jeweiligen Bereich dieser die Verankerungselemente 10 aufweisenden Verbindungsstellen zu konzentrieren, sind die Schweisstellen 13 für die Verbindung der Dämmschicht 2 mit der Bodenwand 3 jeweils neben einem Verankerungselement 10 bzw. einer Ausnehmung 11 vorgesehen, wie es durch die Darstellung eines Schweissstempels 8 in Fig. 4 veranschaulicht ist.

## Patentansprüche

1. Verkleidungsschale mit einer Bodenwand (3) und Seitenwänden (4-7), an deren Innenseite eine Dämmschicht (2) befestigt ist, wobei die Dämmschicht (2) an mehreren Verbindungsstellen mit der Verkleidungsschale (1) verklebt oder verschweisst ist, **dadurch gekennzeichnet, dass** an der Innenseite jeder Seitenwand (4-7) hakenartige, mit einem freien Ende (9) nach aussen ragende Verankerungselemente (10) vorgesehen sind, die sich mit der Dämmschicht (2) in Eingriff befinden, so dass die Stellen einer Klebe- oder Schweissverbindung auf die Bodenwand (3) beschränkt sind.

2. Verkleidungsschale nach Anspruch 1, **dadurch gekennzeichnet, dass** die Dämmschicht (2) im Bereich jedes Verankerungselementes (10) eine vorgeformte, für dessen Aufnahme bestimmte Ausnehmung (11), aufweist, wobei die Verankerungslemente (10) mit einem dornartigen freien Ende (9) durch eine endseitige Abschlussfläche (12) dieser Ausnehmungen (11) in die Dämmschicht (2) eingedrungen sind.

3. Verkleidungsschale nach Anspruch 2, **dadurch gekennzeichnet, dass** die Verankerungselemente (10) parallel zueinander rippenförmig an der Innenseite der Seitenwände (4-79 angeformt sind, wobei ihre freie Aussenkante sich in ihr dornartiges freies Ende (99 fortsetzt.

4. Verkleidungsschale nach einem der Ansprüche 1 bis 3, **dadurch gekennzeichnet, dass** Schweisstellen (13) für die Verbindung der Dämmschicht (2) mit der Bodenwand (3) jeweils neben einem Verankerungselement (10) vorgesehen sind.

5. Verkleidungsschale nach einem der Ansprüche 1 bis 4, **dadurch gekennzeichnet, dass** die Dämmschicht (2) aus geschäumtem, elastischen Kunststoffmaterial besteht, das mit dem Material der Verkleidungsschale (1) verschweissbar ist.

## Claims

1. Shell casing with a base wall (3) and side walls (4-7) to whose inside an insulating layer (2) is fastened and the insulating layer (2) is bonded or welded together at several joints with the shell casing (1), **characterized in that** on the inside of every side wall (4-7) hook-like, anchoring elements (10) with a free end (9) protruding outwards are planned, which penetrate the insulating layer (2) so that the bonding or welding spots are limited to the base wall (3).

2. Shell casing as per claim 1, **characterized in that** the insulating layer (2) shows a preformed peak (11) meant to support the anchoring elements (10) in the area of every anchoring element (10) with a thorn-like free end (9) have penetrated the end surface (12) of these peaks (11) into the insulating layer (2).

3. Shell casing as per claim 2, **characterized in that** the anchoring elements (10) are formed parallel to each other in rib-shaped form on the inside of the side walls (4-79) and the free outer edge continue in its thorn-like free end (99).

4. Shell casing as per one of the claims from 1 to 3, **characterized in that** welding points (13) are planned for the connection of the insulating layer (2) with the base wall (3) in each case beside an anchoring element (10).

5. Shell casing as per one of the claims from 1 to 4, **characterized in that** the insulating layer (2) is made of foamed elastic plastic material which can be welded with the material of the shell casing (1).

## Revendications

1. Coque de revêtement comprenant une paroi de fond (3) et des parois latérales (4 - 7), dans laquelle une couche isolante (2) est fixée sur la face intérieure de celle-ci, dans laquelle la couche isolante (2) est collée ou soudée à la coque de revêtement (1) en plusieurs endroits de liaison, **caractérisée en ce que** des éléments d'ancrage (10) qui sont en forme de crochet et qui dépassent vers l'extérieur avec une extrémité libre (9) sont prévus sur la face intérieure de chaque paroi latérale (4 - 7), lesquels se trouvent en engagement avec la couche isolante (2) de telle sorte que les endroits d'une liaison par soudage ou par collage sur la paroi de fond (3) sont restreints.

2. Coque de revêtement selon la revendication 1, **caractérisée en ce que** la couche isolante (2) présente dans la zone de chaque élément d'ancrage (10) un évidement préformé (11) destiné à la réception de celui-ci, dans laquelle les éléments d'ancrage (10) ont pénétré dans la couche isolante (2) par une extrémité libre en forme de pointe (9) à travers une surface de fermeture (12) du côté terminal de ces évidements (11).

3. Coque de revêtement selon la revendication 2, **caractérisée en ce que** les éléments d'ancrage (10) sont conformés en forme de nervure sur la face intérieure des parois latérales (4 - 79 et parallèlement l'un à l'autre, dans laquelle leur arête extérieure libre se poursuit dans leur extrémité libre en forme de pointe (9).

4. Coque de revêtement selon l'une des revendications 1 à 3, **caractérisée en ce que** les points de soudage (13) destinés à la liaison de la couche isolante (2) et de la paroi de fond (3) sont prévus respectivement à côté d'un élément d'ancrage (10).

5. Coque de revêtement selon l'une des revendications 1 à 4, **caractérisée en ce que** la couche isolante (2) est constituée de matériau en matière plastique, moussé et élastique, lequel peut être soudé avec le matériau de la coque de revêtement (1).
